# EUROPÄISCHE PATENTANMELDUNG

(11) **EP 0 984 564 A1**
(43) Veröffentlichungstag der Anmeldung: **08.03.2000**
(21) Anmeldenummer: 99115146.5
(22) Anmeldetag: 10.08.1999
(51) Int. Cl.: H04B 3/54

(54) **Auslagerung von Funktionalität eines öffentlichen Telefons in einen vorgeschalteten Server**

(30) Priorität: 25.08.1998 DE 19838655
(71) Anmelder: SIEMENS AKTIENGESELLSCHAFT, 80333 München (DE)
(72) Erfinder: Eitel, Peter, 85649 Brunnthal (DE)

(57) **Zusammenfassung**

Die Erfindung betrifft ein Kommunikationssystem mit einem öffentlichen Telefon (ÖT) und mit einer damit in Verbindung stehenden Trafostation (TS), die in ein Stromversorgungsnetz eingebunden und mit einem Kommunikationsnetz (KN) verbunden ist, bei dem in der Trafostation (TS) dem öffentlichen Telefon (ÖT) ein Server (SV) vorgelagert ist, wobei im öffentlichen Telefon (ÖT) selbst die kommunikationsspezifischen Aufgaben und im Server (SV) die Transferaufgaben mit einem Hintergrundsystem abgewickelt werden.

## Beschreibung

Die Erfindung betrifft ein Kommunikationssystem mit einem öffentlichen Telefon.

Unter einem öffentlichen Telefon soll ein Münz- oder Kartentelefon verstanden werden. Dieses Telefon kann in geschlossenen Gebäuden, wie beispielsweise in Gaststätten oder in öffentlichen Einrichtungen, oder in einem bekannten Telefonhäuschen installiert sein. Die öffentlichen Telefone werden von Telefongesellschaften zur Allgemeinnutzung bereitgestellt.

Die Leistung für den Betrieb der öffentlichen Telefone wird entweder über einen Stromanschluss, eine sogenannte Powerline mit beispielsweise 230 Volt, über alternative Stromquellen, wie beispielsweise Solarzellen, oder direkt über eine Kommunikationsleitung zur Verfügung gestellt. Im letzteren Fall sind dann allerdings die Funktionen eingeschränkt. Der Strombedarf für ein Telefonhäuschen ist groß. Energie wird benötigt für die Innenbeleuchtung, zur Kenntlichmachung außen, für die Beleuchtung eines Telefondisplays, für einen leistungsstarken Kartenleser usw. Die Anbindung an ein Kommunikationsnetz erfolgt über eine zum Stromanschluss zusätzlich verlegte Kommunikationsleitung, beispielsweise ISDN, oder eine Funkverbindung, beispielsweise GSM.

Das öffentliche Telefon wird für Kommunikationsverbindungen, das heißt zur Sprachdaten- beziehungsweise allgemein zur Datenübertragung verwendet. Neben der Abwicklung der Kommunikationsverbindung sind in einem öffentlichen Telefon noch weitere Funktionen realisiert. Es steht in einer Datenverbindung mit einem Hintergrundsystem. Das Hintergrundsystem ist beispielsweise in einem Rechner eines Kommunikationsnetzes installiert.

Zwischen dem Hintergrundsystem und dem öffentlichen Telefon findet ein Datenaustausch beispielsweise für folgende Zwecke statt: download von blacklists (das heisst Herunterladen der Kartennummern für gesperrte Karten), Regelmeldungen für Abrechnungsdaten, das Sperren von Rufnummern (beispielsweise für Auslandsgespräche), Meldungen über den Hardwarestatus des öffentlichen Telefons selbst (beispielsweise Endgeräte defekt), sowie Daten zur Konfigurierung des Systems durch einen Parameterdownload, durch den das System individuell einstellbar ist. Weiter wird zwischen dem Hintergrundsystem und dem öffentlichen Telefon das Abbuchungsverfahren für vorbezahlte Telefonkarten abgewickelt. Diese Aufzählung ist nicht vollständig und soll beispielhaft die vielfältigen Funktionen des öffentlichen Telefons beschreiben. Dieser umfangreiche Datenaustausch bedingt entsprechend kostspielige Schaltungen in dem öffentlichen Telefon.

Öffentliche Telefone werden oftmals bei Diebstahlversuchen oder allgemein durch Vandalismus bedingte Aktionen beschädigt oder zerstört. Wie vorstehend beschrieben sind die Reparaturen beziehungsweise der Austausch des Telefongerätes im öffentliche Telefon sehr teuer.

Der Erfindung liegt die Aufgabe zugrunde, ein Kommunikationssystem der eingangs genannten Art anzugeben, bei dem die vandalismusbedingten Kosten reduziert sind.

Diese Aufgabe wird erfindungsgemäß durch die im Patentanspruch 1 beziehungsweise 2 angegebenen Merkmale gelöst.

Die Erfindung gliedert sich in 2 Teilschritte:
- Schritt 1:: Die Anbindung der öffentlichen Telefone an einen Server über eine Powerline oder über eine Funkverbindung (beispielsweise DECT, oder GSM).
- Schritt 2:: Die Verlagerung von Funktionen des öffentlichen Telefons in den vorgelagerten Server, wie beispielsweise Ablage der Blacklists, Sammeln von Accountingdaten, Bereithaltung von Sicherheitsmoduln

Der Vorteil zu Schritt 1 besteht darin, daß bei dieser Änbindungsart keine additiven für die Kommunikation notwendigen Kabel verlegt werden müssen. Eine Mobilität der Endgeräte in einem je nach der Topologie vorgegebenen Radius ist gewähr-leistet, ohne daß dabei Verlegungskosten anfallen. Die Installationsdichte der Endgeräte ist aufgrund der weitaus dichteren Powerline-Versorgung oder der Kapazitäten eines Funknetzes umfassender.

Energieversorgungsunternehmen können zum Ausbau der öffentlichen Telefone beziehungsweise allgemein der Telefonanschlüsse sofort auf ihr bestehendes Stromversorgungsnetz zurückgreifen. Ab dem Einspeisepunkt, das heißt der Trafostation, sind sie autark, gleichwohl sie mit der Kommunikation via Powerline oder dem Funknetz zum Endgerät weitergehen..

Der Vorteil zu Schritt 2 besteht darin, daß die Endgeräte Hardware-mäßig geringer bestückt werden müssen und damit kostengünstiger hergestellt werden können, weil innerhalb der Server zentral Informationen gehalten und bestimmte Funktionen durchgeführt werden können. Gleichzeitig wirkt sich dies positiv aus bei einen stets einzukalkulierenden Schadensfall durch Vandalismus, weil der Wert des Endgerätes nahezu entfallen kann. Ein besonderer Schutz gegenüber Vandalismus muß nur noch für den Server bereitgestellt werden, der zudem normalerweise auch nicht optisch so auffällig wie ein Endgerät ist.

Die Konzentration von Serverfunktionen, vorgelagert in der Trafostation oder in einem Netzendgerät, ermöglicht billigere Endgeräte zur Verwendung als öffentliche Telefone.

Im Folgenden wird die Erfindung anhand eines in der Zeichnung dargestellten Ausführungsbeispieles beschrieben. Dabei zeigen:
- Figur 1: die Anbindung eines Endgerätes eines öffentlichen Telefons an eine Trafostation über Powerline, und
- Figur 2: die Anbindung eines Endgerätes eines öffentlichen Telefons an eine Netzendgerät über eine Luftschnittstelle.

Für die Beschreibung der Erfindung wird auf den Artikel 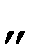 Sprache über die Stromleitung", von Manfred Zimmermann und Klaus Dostert, veröffentlicht in der Funkschau, Heft 4, Jahrgang 1998, Seiten 22 bis 27, Bezug genommen. In diesem Artikel werden bereits genutzte Verfahren und neue Dienste zur Anbindung eines Telekommunikations-Endkunden beschrieben.

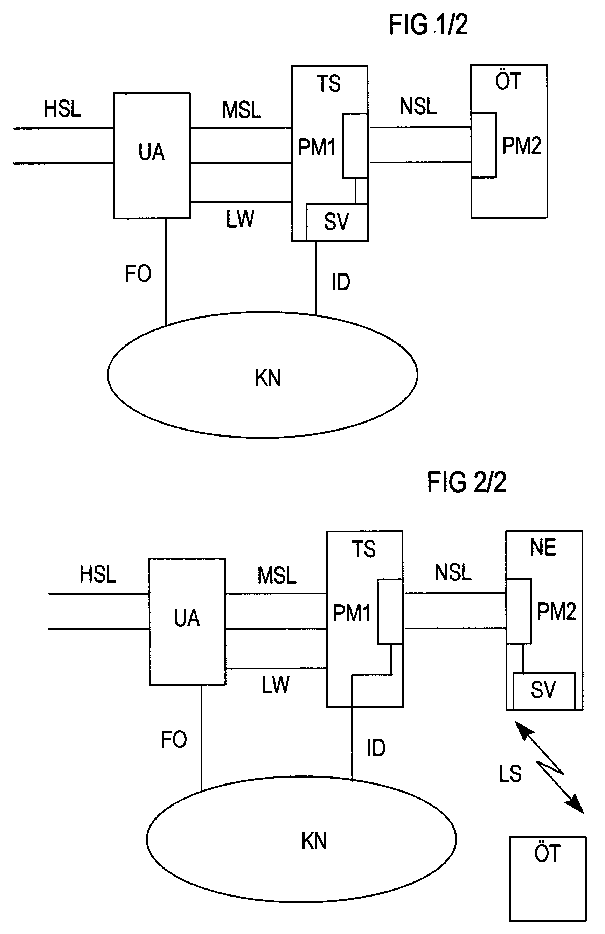

In Figur 1 sind die aus der Struktur des Stromnetzes bekannten drei Ebenen dargestellt, eine Hochspannungsebene mit einem Bereich von 110 kV bis 380 kV, eine Mittelspannungsebene von 10 kV bis 30 kV, und eine Niederspannungsebene von ca. 0,4 kV. In der Hochspannungsebene ist eine Hochspannungsleitung HSL an einer Umspannanlage UA angeschaltet. In der Umspannanlage UA erfolgt die Herabsetzung der Stromenergie von der Hochspannungsebene in die Mittelspannungsebene. Von der Umspannanlage UA führt eine Mittelspannungsleitung MSL zu einer Trafostation TS. In der Trafostation TS erfolgt die Herabsetzung der Mittelspannungsebene in die Niederspannungsebene. An der Trafostation TS sind über eine Niederspannungsleitung NSL die Endkunden angeschaltet. Die Niederspannungsleitung NSL ist beispielsweise im Ortsbereich als Sternnetz konfiguriert.

Das Energieversorgungssystem, mit der Umspannanlage UA und der Trafostation TS sowie den Verbindungs- und Anschlussleitungen, ist mit einem Kommunikationsnetz KN verbunden. Die Umspannanlage UA kann hierzu über eine Fiberoptik FO oder/und die Trafostation TS kann über einen ISDN-Anschluss ID mit dem Kommunikationsnetz KN verbunden sein. Zur internen Datenübertragung im Energieversorgungssystem ist die Umspannanlage UA über einen Lichtwellenleiter LW mit der Trafostation TS verbunden.

Erfindungsgemäß ist bei einer Variante ein öffentliches Telefon ÖT über die Niederspannungsleitung NSL mit der Trafostation TS verbunden. Weiter sind im öffentlichen Telefon ÖT und in der Trafostation TS Powerline Modems PM1 (in der Trafostation TS) und PM2 (im öffentlichen Telefon ÖT) vorgesehen. Die Powerline Modems PM1 beziehungsweise PM2 enthalten die für den Aufbau einer Kommunikationsverbindung über die Niederspannungsleitung NSL erforderlichen Schaltungen. Ein Modulationsverfahren zur Durchführung einer Kommunikationsverbindung über eine Stromversorgungsleitung ist in dem Artikel 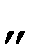 Modulation für Powerline" von Ulfur Ron Halldorsson und Klaus Dostert, veröffentlicht in Funkschau, Heft 6, Jahrgang 98, Seiten 56 bis 61, beschrieben. Die technische Ausgestaltung der Powerline Modems PM1, PM2 ist zumindest auf Grundlage der genannten Druckschriften für den Fachmann möglich. Der spezielle Aufbau der Schaltungen selbst ist für die Erfindung von untergeordneter Bedeutung.

Die Niederspannungsleitung NSL zwischen dem öffentlichen Telefon ÖT und der Trafostation TS dient zum Einen der Stromversorgung des öffentlichen Telefons ÖT, und zum Anderen zur gleichzeitigen Bereitstellung einer Kommunikationsverbindung. Neben der Niederspannungsleitung NSL ist keine weitere Leitungsverbindung zwischen dem öffentlichen Telefon ÖT und der Trafostation TS notwendig.

Die Kommunikationsverbindung wird zwischen dem öffentlichen Telefon ÖT über die Niederspannungsleitung NSL zur Trafostation TS aufgebaut. Von dort führt sie weiter entweder direkt über die Teilnehmeranschlussleitung ID zum Kommunikationsnetz KN, oder über den Lichtwellenleiter LW zur Umspannanlage UA und von dort über die Fiberoptik FO ebenfalls zum Kommunikationsnetz KN. Letztlich ist es für die Erfindung notwendig, dass die Kommunikationsverbindung von der Trafostation TS über eine Kommunikationsleitung, ID oder LW und FO, zum Kommunikationsnetz KN führt.

Weiter wird bei der Erfindung zumindest ein Teil dieser Funktionalitäten beziehungsweise des Datentransfers zwischen einem Server SV, der in der Trafostation TS angeordnet ist, und dem Hintergrundsystem durchgeführt. Der Server SV ist sozusagen dem öffentlichen Telefon ÖT vorgelagert. Das öffentliche Telefon ÖT ist hierbei vorzugsweise nur noch ein Endgerät zur Sprachein- und -ausgabe. Weiter weist das öffentliche Telefon ÖT beispielsweise einen Kartenleser auf, von dem aus die Kartendaten beziehungsweise eingegebene Nummern, beispielsweise die PIN (Persönliche Identifizierungsnummer), zum Server SV übertragen werden. Der sonstige umfangreiche Datenaustausch wird nur zwischen dem Server SV und dem Kommunikationsnetz beziehungsweise dem Hintergrundsystem durchgeführt. Die in dem Server SV enthaltenen Schaltungen und Daten sind damit für Benutzer des öffentlichen Telefons ÖT nicht erreichbar und nicht manipulierbar.

An Stelle der Powerline-Verbindung zwischen dem öffentlichen Telefon ÖT und der Trafostation TS kann auch eine Luftschnittstelle, beispielsweise nach DECT oder nach GSM, vorgesehen sein.

Bei einer anderen Variante der Erfindung, dargestellt in Figur 2, ist ein Netzendgerät NE über die Niederspannungsleitung NSL mit der Trafostation TS verbunden. Das Netzendgerät kann beispielsweise eine Basisstation für eine DECT Telefonanlage sein. Diese Telefonanlage beziehungsweise das Netzendgerät NE weisen das für die Kommunikation notwendige Powerline Modem PM2 auf. Das Netzendgerät NE weist den Server SV auf, der mit dem Powerline Modem PM2 verbunden ist und zur Abwicklung des Datentransfers mit dem Hintergrundsystem dient.

Am Netzendgerät NE ist über eine Luftschnittstelle LS das öffentliche Telefon ÖT angeschaltet. An Stelle dieser Luftschnittstelle LS kann auch eine drahtgebundene Verbindung vorgesehen sein.

Die Kommunikationsverbindung wird zwischen dem öffentlichen Telefon ÖT über die Luftschnittstelle LS zum Netzendgerät NE und weiter über die Niederspannungsleitung NSL zur Trafostation TS aufgebaut. Von dort führt sie entweder direkt über die Teilnehmeranschlussleitung ID zum Kommunikationsnetz KN, oder über den Lichtwellenleiter LW zur Umspannanlage UA und von dort über die Fiberoptik FO ebenfalls zum Kommunikationsnetz KN.

## Patentansprüche

1. Kommunikationssystem mit
einem öffentlichen Telefon (ÖT) und mit
einer damit in Verbindung stehenden Trafostation (TS), die in ein Stromversorgungsnetz eingebunden und mit einem Kommunikationsnetz (KN) verbunden ist,
bei dem in der Trafostation (TS) dem öffentlichen Telefon (ÖT) ein Server (SV) vorgelagert ist, wobei im öffentlichen Telefon (ÖT) selbst die kommunikationsspezifischen Aufgaben und im Server (SV) die Transferaufgaben mit einem Hintergrundsystem abgewickelt werden.

2. Kommunikationssystem mit
einem öffentlichen Telefon (ÖT) und mit
einem damit in Verbindung stehenden Netzendgerät (NE), das in ein Stromversorgungsnetz eingebunden und mit einem Kommunikationsnetz (KN) verbunden ist,
bei dem in dem Netzendgerät (NE) dem öffentlichen Telefon (ÖT) ein Server (SV) vorgelagert ist, wobei im öffentlichen Telefon (ÖT) selbst die kommunikationsspezifischen Aufgaben und im Server (SV) die Transferaufgaben mit einem Hintergrundsystem abgewickelt werden.
